# FASCICULE DE BREVET EUROPEEN

(11) **EP 2 118 516 B1**
(45) Date de publication et mention de la délivrance du brevet: **28.12.2011**
(21) Numéro de dépôt: 08709779.6
(22) Date de dépôt: 08.02.2008
(51) Int. Cl.: F16F 15/14

(54) **DISPOSITIF D'AMORTISSEMENT DE VIBRATIONS**
SCHWINGUNGSDÄMPFUNGSVORRICHTUNG
VIBRATION DAMPING DEVICE

(30) Priorité: 11.02.2007 FR 0700953
(43) Date de publication de la demande: 18.11.2009
(73) Titulaire: Le Confort Acoustique SARL, 78410 Aubergenville (FR)
(72) Inventeur: BARCA, Didier, F-28260 Sorel Moussel (FR)
(74) Mandataire: Thibon-Littaye, Annick
(86) Numéro de dépôt international: PCT/IB2008/000273
(87) Numéro de publication internationale: WO 2008/096246

(56) Documents cités:
- EP-A- 0 050 567
- EP-A- 1 074 762
- EP-A1- 0 466 540
- EP-A2- 0 822 102
- WO-A-99/32307
- FR-A- 1 284 994
- US-A- 2 605 132
- US-A- 3 677 662
- US-A- 4 254 985

## Description

La présente invention concerne la conception et la réalisation d'un dispositif d'amortissement de vibrations à la résonance d'un émetteur de vibrations, du type à couche de matériau viscoélastique comprise entre un segment formant moyen de couplage à l'émetteur et un segment de contrainte.

Le dispositif selon l'invention trouve notamment application dans le traitement des roues de train, des lames de scie circulaire, des machines tournantes, des engrenages, etc.

On connaît des dispositifs d'amortissement de vibrations qui consistent en un ensemble unitaire indissociable de trois couches assemblées, comportant une couche de matériau viscoélastique entre deux segments circulaires. Un tel dispositif, tel que décrit notamment dans le document de brevet EP 0 466 540, présente les avantages d'une grande fiabilité, d'une grande facilité de mise en place sur l'émetteur et d'une bonne capacité d'amortissement. Les trois couches assemblées les unes aux autres sont faites respectivement d'une couche de matériau viscoélastique intercalée entre un segment de couplage et un segment de contrainte. L'amortissement des vibrations s'effectue par cisaillement des fibres du matériau viscoélastique les unes par rapport aux autres. Le segment de couplage permet le couplage avec l'émetteur. Il est formé par un anneau circulaire fendu qui est élastiquement déformable, et qui est apte à se loger sous contrainte radiale permanente dans une gorge annulaire de retenue correspondante ménagée sur l'émetteur. Il est introduit dans cette gorge par encliquetage élastique, pour fonctionner par expansion ou par compression suivant que le dispositif est mis en place autour d'un arbre extérieurement ou à l'intérieur d'un alésage. Le segment de contrainte consiste également en un anneau circulaire fendu élastiquement déformable.

Un tel dispositif, s'il s'avère avantageux en bien des points par rapport aux dispositifs déjà existants, présente néanmoins l'inconvénient de parfois se déloger de sa gorge de retenue dans l'émetteur lors de l'utilisation, sous l'effet d'une part des fortes contraintes de travail qui s'exercent sur lui et d'autre part de l'accumulation de poussières à l'extérieur du segment de couplage, qui tend à le resserrer radialement.

La présente invention vise à remédier aux inconvénients de tels dispositifs d'amortissement des vibrations, et notamment à ceux exposés ci-avant, en proposant un dispositif qui assure un contact permanent avec le fond de la gorge de retenue dans l'émetteur lors de son utilisation.

A cet effet, l'invention propose un dispositif d'amortissement de vibrations à la résonance d'un émetteur, du type comportant une couche intermédiaire de matériau viscoélastique apte à dissiper l'énergie de vibration par interaction mutuelle de ses parties constitutives, cette couche étant intercalée fixe entre d'une part un segment de couplage sous forme d'un anneau circulaire ouvert (ou fendu) élastiquement d.éformable, et d'autre part un segment de contrainte également constitué d'un anneau circulaire ouvert (ou fendu) élastiquement déformable. Le dispositif selon l'invention se caractérise en ce que les fentes d'ouverture respectives du segment de couplage et du segment de contrainte sont décalées l'une par rapport à l'autre, et suivant ses modes de réalisation préférés, il comporte des moyens de liaison l'une à l'autre de parties d'extrémité respectives du segment de couplage et du segment de contrainte se chevauchant entre les fentes.

La liaison assurée entre les segments au niveau de leurs parties d'extrémité en chevauchement a pour finalité essentielle de maintenir les fentes respectives du segment de couplage et du segment de contrainte en situation décalée et d'empêcher les bords extrêmes des deux segments de se fermer l'un sur l'autre. Elle est avantageusement réalisée par une butée qui est interposée de l'une à l'autre des deux parties d'extrémité en regard, et qui est de référence fixée sur elles, le cas échéant de manière amovible.

Suivant une caractéristique avantageuse de l'invention, lesdites parties d'extrémité respectives du segment de couplage et du segment de contrainte q:ui se chevauchent entre les fentes sont percées d'orifices traversants, et le dispositif comporte un organe de. butée s'insérant dans ces orifices pour solidariser l'une à l'autre les parties d'extrémité respectives des deux segments.

Une telle configuration du dispositif selon l'invention s'avère tout à fait avantageuse, car elle évite, lorsque les moyens de liaison des deux segments en leurs parties d'extrémité sont opérants, notamment lorsque la butée de solidarisation est en place dans les orifices, que le segment interne se trouve déformé par compression radiale, par diminution de la largeur de sa fente d'ouverture. Ceci est obtenu grâce à la butée qui vient alors se bloquer radialement contre les parois respectives des orifices qu'elle traverse, et qui empêche de ce fait les extrémités libres du segment de couplage et du segment de contrainte de venir en contact l'une avec l'autre. Ainsi, lorsque le dispositif est installé dans sa position d'utilisation, le segment de couplage étant encliqueté en extension élastique à l'intérieur de la gorge annulaire de retenue dans l'émetteur, il ne peut plus se comprimer suffisamment pour sortir spontanément de cette gorge, que ce soit sous l'effet des contraintes de travail ou de l'accumulation de poussières sur sa périphérie extérieure.

Le décalage entre les fentes constitue avantageusement un obstacle pour tout objet susceptible de s'introduire dans la zone opérante du dispositif.

Le dispositif selon l'invention, dont les caractéristiques avantageuses assurent que les extrémités respectives de chacun des segments ne puissent pas entrer en contact entre elles, présente un intérêt majeur par rapport aux dispositifs de l'art antérieur, et notamment à celui décrit dans le document EP 0 466 540. En effet, il est nécessaire, pour obtenir la perte de contact avec le fond de la gorge de retenue dans l'émetteur, d'exercer au niveau de chacune des extrémités du segment de couplage du dispositif selon l'invention une force de déformation radiale: d'amplitude deux fois plus importante que pour le dispositif de l'art antérieur. Le dispositif selon l'invention présente ainsi une stabilité beaucoup plus importante dans émetteur Ceci est avantageusement obtenu avec un encombrement d:u dispositif selon l'invention qui n'est pas plus important que celui des dispositifs de l'art antérieur, ce quels que soient la nature, la forme et le positionnement des moyens de liaison des segments l'un à l'autre.

En pratique, la butée des moyens de liaison entre les segments est insérée dans les orifices qui la reçoivent une fois que le segment de couplage a été mis en place dans la gorge de retenue dans l'émetteur. Cette opération d'installation nécessite en effet que le segment de couplage soit comprimé en réduction de son diamètre, puis relâché à l'intérieur de la gorge, afin d'assurer l'effet d'encliquetage élastique. Quand la butée est réalisée amovible, elle est de même ôtée avant d'effectuer l'extraction du dispositif hors de l'émetteur, pour permettre la manoeuvre contraire de compression radiale eh force du segment de couplage permettant de le déloger de la gorge de retenue.

D'autres caractéristiques avantageuses du dispositif suivant l'invention ressortent des conditions pratiques préférées de sa fabrication. De manière générale, le matériau viscoélastique peut être mis en oeuvre par compression, par compression-transfert, ou par injection, la technique préférée étant celle de la compression transfert.

Suivant l'une de ces caractéristiques avantageuses, il y a continuité de la couche viscoélastique entre le segment de couplage et le segment de contrainte au niveau des parties d'extrémité se chevauchant entre les fentes. Dans cette zone, la couche viscoélastique est spécifiquement et intimement liée au segment de couplage, alors que les surfaces de contact respectives de la couche viscoélastique et du segment de contrainte sont simplement en contact l'une avec l'autre, sans être fixées l'une à l'autre. Ainsi, le segment de couplage et le segment de contrainte ne sont pas fixés l'un à l'autre, que ce soit directement ou indirectement autour de la couche de matériau viscoélastique; dans la zone se chevauchant entre: les fentes. Cette caractéristique permet avantageusement d'obtenir une capacité de compression du segment de couplage, par diminution de la largeur de sa fente d'ouverture, suffisante pour assurer la mise en place dans la gorge de l'émetteur et l'extraction hors de cette zone.

Suivant des modes de réalisation préférés dans la pratique industrielle, l'invention répond en outre aux caractéristiques suivantes, mises en oeuvre séparément ou en chacune de leurs combinaisons techniquement opérantes.

Dans des modes de réalisation préférés de l'invention, les moyens de liaison entre les parties d'extrémité respectives des deux segments se chevauchant comporte un organe de butée amovible réalisé sous la forme d'une vis, de préférence une vis auto-indesserrable, dite vis de sécurité, qui vient en prise par une extrémité dans un filetage ménagé à cet effet dans un orifice coopérant du segment de contrainte. Cette caractéristique permet avantageusement un retrait facile de la vis lorsqu'il est nécessaire d'extraire le dispositif hors de l'émetteur.

Dans d'autres modes de réalisation préférés de l'invention, la butée est une goupille dite goupille élastique, c'est-à-dire qui est fendue selon sa direction longitudinale et qui est enfoncée en force dans l'orifice du segment de contrainte. Une butée analogue peut également consister en tout autre moyen de solidarisation amovible équivalent.

Suivant une caractéristique avantageuse de l'invention, l'orifice ménagé dans le segment de couplage présente la forme d'une lumière oblongue dans la direction longitudinale de l'anneau qui constitue le segment. Ceci facilite l'insertion de la butée dans les deux orifices coïncidents des segments, lorsque le segment de couplage est monté sur l'émetteur, et ce même dans les cas où ce segment subit alors une légère déformation, qui tend à décaler les centres des deux orifices l'un par rapport à l'autre.

Dans des modes de réalisation préférés de l'invention, l'orifice du segment de contrainte présente, sur la face en vis-à-vis du segment de couplage, une couronne interne de: plus grand diamètre et de faible profondeur.

Cette couronne permet avantageusement de loger toute ou partie-de la hauteur de la tête de la butée lorsque cette dernière est une: vis: de sécurité, de telle sorte que cette vis ne soit pas saillante de la surface externe du segment de couplage. Dans le cas où la butée est une goupille élastique, ou en l'absence de butée, cette couronne n'est pas fonctionnelle.

L'invention vise notamment également à faciliter les opérations d'installation du dispositif dans l'émetteur, et d'extraction hors de ce dernier.

A cet effet, il est prévu selon l'invention la possibilité d'insérer les branches d'une pince au niveau des deux parties d'extrémité opposées du segment de couplage, de part et d'autre de la fente d'ouverture de ce dernier, afin d'effectuer une compression en force de ce segment, et de diminuer son diamètre.

La première branche de la pince peut avantageusement être insérée dans la lumière oblongue du segment de couplage, qui présente alors une double fonction, et qui constitue une prise pour cette branche. Ceci n'est possible que lorsque la butée n'a pas encore été insérée dans cette lumière, ou qu'elle en a été retirée.

La deuxième branche de la pince peut, dans des modes de réalisation préférés de l'invention, être insérée dans un perçage que présente le segment de couplage dans sa partie d'extrémité opposée à la partie dans laquelle est ménagée la lumière oblongue (c'est-à-dire à la partie d'extrémité se solidarisant au segment de contrainte).

Le segment de contrainte présente alors de préférence un perçage coïncident avec le perçage du segment de couplage, pour l'insertion de la deuxième branche de pince également à travers lui. Ce perçage coïncident est cependant évité dans certains cas, en fonction du procédé de fabrication choisi pour le dispositif selon l'invention.

Au moyen de la pince qui est ainsi insérée, au niveau des deux parties d'extrémité opposées du segment de couplage; de part et d'autre de la fente d'ouverture de ce dernier, par l'une de ses branches à travers le perçage du segment de couplage et optionnellement celui du segment de contrainte, et par l'autre à travers la lumière oblongue du segment de couplage, il est alors. possible d'effectuer une compression en force de ce segment, et de diminuer son diamètre pour permettre son insertion dans l'émetteur ou son extraction hors de celui-ci.

Cette pince en prise dans les perçages et orifices respectifs du segment de couplage, et pour partie du segment de contrainte, permet également avantageusement d'exercer sur le segment de couplage un mouvement de poussée ou de traction, en vue de la mise en place du dispositif dans l'émetteur ou de son extraction hors de ce dernier.

Dans des modes de réalisation préférés de l'invention, les orifices sont disposés sensiblement le long de la ligne médiane du segment de contrainte. Il en résulte une stabilité accrue du dispositif aux contraintes exercées sur lui lors de son utilisation.

Le segment de couplage et le segment de contrainte sont notamment réalisés à partir d'une feuille d'acier ressort. Ce matériau est avantageusement choisi de manière à assurer la capacité de déformation requise en fonction de l'application.

Selon une caractéristique avantageuse de l'invention, le segment de couplage et le segment de contrainte constituent, avec le matériau viscoélastique intercalé entre eux, une structure multicouches comportant au moins trois couches empilées, qui sont réunies entre elles éventuellement par l'intermédiaire d'une couche spéciale d'adhésif, mais plus souvent par adhérisation du matériau viscoélastique lui-même, grâce à un agent d'dhérisation appliquée au moulage de la matière. L'empilement en question peut éventuellement être plus important, et comporter une série de plusieurs couples successifs de matériau viscoélastique et segment de contrainte. Dans ce cas, l'homme du métier saura aisément, à la lumière de la présente description, appliquer l'invention à une telle configuration du dispositif.

Dans les modes de réalisation préférés de l'invention, les différentes couches sont liées entre elles par le matériau viscoélastique lui-même, grâce à des propriétés adhésives qui se manifestent lors de- la fabrication du dispositif, au cours des opérations d'assemblage des deux segments et de mise en précontrainte du segment de couplage. Un tel matériau est, par exemple, à base de caoutchouc adhérisé. Dans d'autres modes de réalisation dans lesquels un matériau adhésif distinct est utilisé, on choisit avantageusement un adhésif de type structural, c'est-à-dire à hautes performances, comme une colle à base de cyanoacrylate ou de résines époxy.

L'invention sera maintenant plus complètement décrite dans le cadre de caractéristiques préférées et de leurs avantages, en faisant référence aux figures 1 à 6 dans lesquelles :
- la figure 1 représente un dispositif selon l'invention en vue de dessus ;
- la figure 2 représente une vue en coupe selon le plan A-A du dispositif de la figure 1 ;
- la figure 3 illustre en vue de dessus une partie du dispositif de la figure 1, incluant les parties d'extrémité du segment de couplage et du segment de contrainte ;
- la figure 4 montre en vue en coupe axiale le dispositif de la figure 1 monté dans une roue émettrice de vibrations ;
- la figure 5 représente la partie du segment de contrainte de la figure 3 en vue de dessous (face au contact de la couche viscoélastique) ;
- et la figure 6 montre la partie du segment de couplage de la figure 3 en vue de dessous (face opposée à la face au contact de la couche viscoélastique).

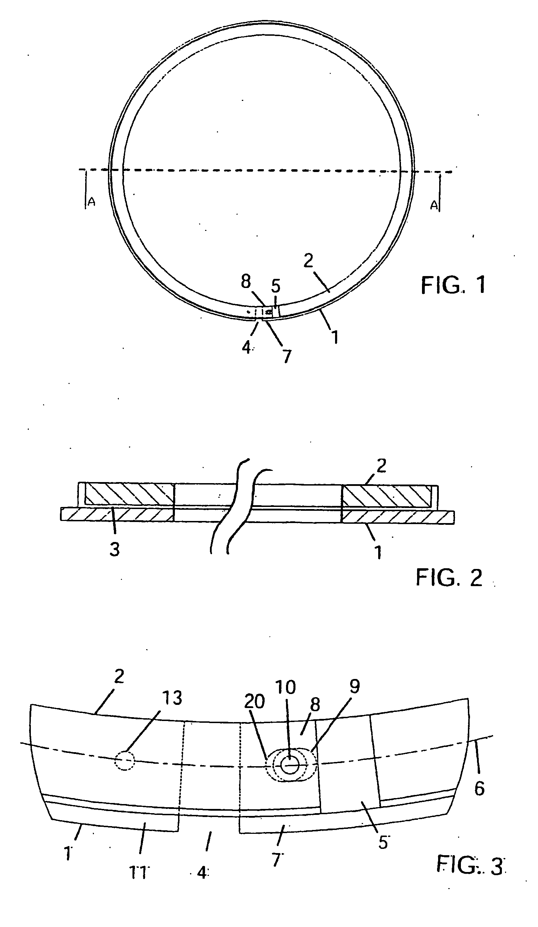

Le dispositif selon l'invention et représenté sur la figure 1 en vue- de- dessus, c'est-à-dire, dans le sens d'orientation choisi pour les figures, avec le segment de contrainte disposé vers le haut.

Le dispositif présente une forme globale annulaire. Il comporte un segment de couplage 1, constitué d'un anneau circulaire: fendu élastiquement déformable; disposé sur la figure en dessous d'un segment de contrainte 2, également constitué d'un anneau circulaire fendu élastiquement déformable.

Le segment de couplage 1 et le segment de contrainte 2 sont concentriques et ils présentent un diamètre interne sensiblement identique. Le segment de couplage 1 présente par contre un diamètre externe plus important que le diamètre externe du segment de contrainte 2, si bien qu'il dépasse légèrement du pourtour extérieur de ce dernier, comme on peut le voir sur la figure.

En vue en coupe selon le plan A-A, comme illustré sur la figure 2, on retrouve le segment de couplage 1 et le segment de contrainte 2, entre lesquels est intercalée une couche 3 d'un matériau viscoélastique.

Le matériau viscoélastique est choisi, en fonction de l'application particulière pour laquelle le dispositif selon l'invention est destiné, pour ses caractéristiques physiques adaptées aux conditions d'utilisation des pièces équipées du dispositif selon l'invention, et notamment pour sa capacité d'amortissement optimal dans les gammes de température et de fréquence propres à cette utilisation.

La couche viscoélastique 3 se présente sous forme de film ou de feuille, à base de résines ou de caoutchoucs spéciaux. Elle est solidarisée par collage, ou par adhérisation dans le cas d'élastomères viscoélastiques, sur le segment de couplage 1 d'une part et sur le segment de contrainte 2 d'autre part. Elle a pour rôle, lorsque la pièce équipée du dispositif entre en résonance, de dissiper l'énergie de vibration par cisaillement.

Dans certains cas, le matériau viscoélastique 3 est une résine époxy mono- ou bi-composants, à laquelle on a ajouté une charge spécifique. Dans d'autres cas, l'assemblage des trois couches que forment le segment de couplage- 1, le- matériau viscoélastique. 3 et le segment de contrainte 2, est réalisé avec des adhésifs structuraux spécialement choisis pour leurs caractéristiques mécaniques, notamment leur tenue aux vibrations, leur résistance aux contraintes en cisaillement, leur tenue en température, et leur résistance aux lubrifiants. Un adhésif structural du type cyanolate à prise très rapide est par exemple choisi.

Les anneaux constituant le segment de couplage 1 et le segment de contrainte 2 sont réalisés à partir d'un acier spécial de haute dureté et haute limite élastique.

Leurs épaisseurs et sections respectives sont rigoureusement déterminées afin de présenter une surface d'échange suffisante pour l'amortissement des vibrations, d'assurer un couplage parfait avec les pièces traitées quel que soit le niveau de vibrations, et de présenter un amortissement optimum relativement ciblé (en fréquence et température).

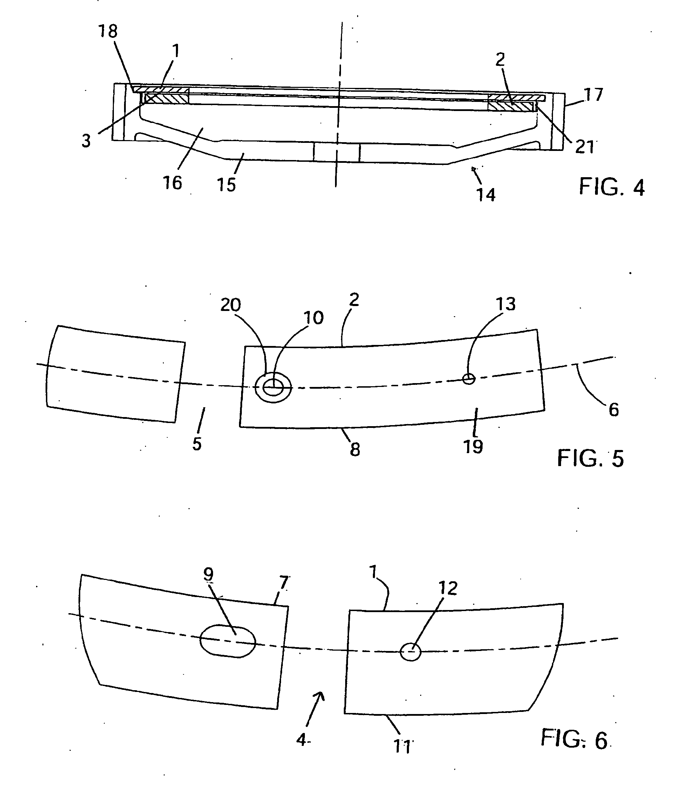

Les parties d'extrémité radiales du segment de couplage 1 et du segment de contrainte 2 sont représentées plus en détail sur la figure 3, ainsi que sur la figure 5 pour le segment de c.ontrainte 2 seul et sur la figure 6 pour le segment de couplage 1 seul.

Chacun des anneaux constituant ces segments comporte une fente d'ouverture. Celle du segment de couplage 1 porte la référence 4 et celle du segment de contrainte 2 la référence 5.

Ces fentes sont décalées l'une par rapport à l'autre. A titre d'exemple, ce décalage représente une distance environ égale à 3 cm, alors que le diamètre du segment de contrainte 2 le long de sa ligne médiane 6 mesure environ 51 cm.

De telles dimensions permettent avantageusement de disposer de la surface nécessaire, dans la zone de chevauchement entre les fentes, pour l'implantation de la butée dans cette zone.

Des orifices traversants 9 et 10 sont percés respectivement dans les parties d'extrémité respectives 7 et 8 se chevauchant entre les fentes du segment de couplage 1 et du segment de contrainte 2.. Ces orifices servent à l'insertion d'une butée, qui n'est pas représentée sur les figures, et qui solidarise les parties d'extrémité 7 et 8 l'une à l'autre. Cette butée peut être une vis de sécurité, une goupille élastique ou tout autre-moyen de butée se fixant solidaire des segments de manière amovible.

L'orifice 9 du segment de couplage 1, représenté de manière plus claire sur la figure 6, présente la forme d'une lumière oblongue suivant la direction longitudinale de l'anneau.

Sa longueur, suivant cette direction longitudinale, est par exemple environ égale à 11 mm. Une telle dimension assure avantageusement que lors de l'utilisation le segment de couplage 1 ne puisse pas s'extraire spontanément hors de sa gorge de retenue dans l'émetteur, par l'effet du blocage de la butée dans la direction radiale contre la paroi de la lumière 9 dans laquelle elle est insérée, cet effet empêchant la fermeture de la fente d'ouverture 4. Elle assure aussi cependant une bonne facilité d'insertion de la butée dans les deux orifices 9 et 10 lorsque le segment de couplage 1 est monté sur l'émetteur, même dans les cas où ce segment subit alors une légère déformation, qui tend à décaler les centres des deux orifices 9 et 10 l'un par rapport à l'autre.

Le décalage entre les deux fentes 4 et 5 permet de réaliser une lumière oblongue 9 de la longueur souhaitée dans la zone du segment de couplage 1 chevauchant le segment de contrainte 2 entre les deux fentes.

Dans la zone se chevauchant entre les fentes 4 et 5, le segment de couplage 1 et le segment de contrainte 2 ne sont pas fixés l'un à l'autre par l'intermédiaire du matériau viscoélastique.

Comme montré plus clairement sur la figure 5, l'orifice 10 du segment de contrainte 2. présente une couronne interne 20 sur la face inférieure 19 de l'anneau, qui est la face destinée à être dirigée vers le segment de couplage 1. Cette couronne présente un diamètre plus important que le diamètre de l'orifice 10, par exemple d'environ 8 mm pour un diamètre de l'orifice 10 d'environ 4 mm, et une faible profondeur, notamment d'environ 1 mm. Cette couronne permet de loger tout ou partie de la hauteur de la tête de la butée lorsqu celle-ci est une vis de sécurité, de telle sorte que cette tête n'est pas saillante par rapport à la surface externe du segment de couplage 2.

Dans sa partie d'extrémité 11 opposée à la partie d'extrémité 7 chevauchant le segment dé contrainte 2 entre les fentes, l'anneau de couplage 1 est percé d'un perçage 12 pour l'insertion d'une branche de pince. L'anneau de contrainte 2 est également percé d'un perçage 13 coïncident, qui apparaît seul sur la figure 2. Ce perçage est disposé, sur la partie d'extrémité.8 portant l'orifice 10, en amont de ce dernier, de manière à coïncider avec le perçage 12 de l'anneau de couplage 1 (lorsque l'anneau de couplage 1 et l'anneau de contrainte 2 sont fixés l'un à l'autre, avec les fentes 4 et 5 décalées l'une par rapport à l'autre conformément à l'invention).

Le dispositif selon l'invention se monte sur un émetteur de vibration de la façon illustrée sur la figure 4. A titre d'exemple, il s'agit d'une roue d'engrenage 14 comportant un corps 15 formant une concavité 16. A la périphérie du corps 15 sont taillées des dents d'engrènement 17.

Le segment de couplage 1 est réalisé dans des dimensions le rendant apte à se loger, sous contrainte radiale en extension, dans une gorge annulaire de retenue 18 formée à l'intérieur du corps 15, dans un alésage périphérique interne 21 de la roue. Il forme ainsi un moyen de couplage du dispositif selon l'invention à l'émetteur.

Pour l'installation, le segment de couplage 1 est comprimé, alors que la vis ou autre butée n'est pas encore mise en place, de manière à amener ses deux parties d'extrémité 7 et 11 l'une vers l'autre en diminuant la largeur de la fente 4, jusqu'à une position de montage dans laquelle il peut être inséré dans la gorge 18. Cette compression peut être réalisée au moyen d'une pince dont les branches sont insérées respectivement dans les perçages coïncidents 12 et 13 pour l'une d'entre elles, et dans la lumière oblongue 9 pour l'autre.

Une- fois: le segment de coupage 1 amené en position comprimée au niveau de la gorge: 18, il est relâché et il subit une détente élastique qui tend à écarter les parties: d'extrémité- 7 et 11 l'une: de l'autre. Le diamètre de la gorge réceptrice étant inférieur au diamètre: externe de l'anneau constituant le segment de couplage en position relâchée, ce segment se retrouve ainsi coincé à l'intérieur de la gorge, par un effet d'encliquetage élastique. Comme par ailleurs son diamètre externe est supérieur aux diamètres externes de la couche de matériau viscoélastique et du segment de contrainte, seul le segment de couplage 1 est en contact avec la roue 14.

Ensuite, la butée est insérée dans l'orifice 10, soit par vissage, soit en force, de telle sorte qu'elle traverse la lumière oblongue 9. Cette manipulation est facilitée par la forme oblongue de la lumière 9, qui assure la coïncidence avec l'orifice 10 du segment de contrainte 2 même en cas de léger déplacement de la lumière 9 par rapport à ce dernier, en raison d'une légère déformation du segment de couplage à l'intérieur de la gorge 18.

Lors de l'utilisation, le segment de couplage 1 ne peut alors se déloger de la gorge 18, même sous l'effet des contraintes de travail exercées sur lui qui tendent à le faire beaucoup bouger, ou en conséquence d'un phénomène d'accumulation de poussières sur sa périphérie extérieure, qui tendraient à le refermer par effet de compression radiale. En effet, dans le cas où de telles forces tendant à ramener les deux parties d'extrémité 7 et 11 l'une vers l'autre seraient exercées sur le segment de couplage, la compression de l'anneau serait limitée par le blocage de la butée contre la paroi latérale de la lumière oblongue 9. Il ne serait ainsi pas autorisé une compression suffisante pour permettre au segment de quitter l'intérieur de la gorge.

Le dispositif selon l'invention reste ainsi de façon très stable dans son logement dans la roue 14 durant toute l'utilisation.

Lorsqu'on souhaite extraire le dispositif de la roue, il suffit de retirer la butée, puis de se saisir du dispositif au moyen d'une pince, dont les branches sont insérées respectivement dans les perçages. 12 et 13 et dans la lumière- oblongue 9; par la: face extérieur du segment de couplage, et d'exercer en même temps un effort- de compression radiale du segment et un effort, de traction hors de la gorge- 18. Ce mouvement permet une extraction aisée du dispositif:

Le dispositif selon l'invention est applicable non seulement aux pièces creuses comportant un alésage, comme décrit ci-avant, mais également aux arbres. Dans ce cas, il est avantageusement prévu que le diamètre interne de l'anneau constituant le segment de couplage soit inférieur aux diamètres internes de la couche de matériau viscoélastique et du segment de contrainte, si bien que seul le segment de couplage dépasse sur la périphérie interne du dispositif, pour venir se fixer autour de l'arbre, dans une gorge annulaire creusée sur la surface externe de ce dernier.

La description qui précède explique clairement comment l'invention permet d'atteindre les objectifs qu'elle s'est fixés. En particulier, elle fournit un dispositif d'amortissement de vibrations qui ne risque pratiquement pas de quitter spontanément son logement de retenue dans l'émetteur de vibrations dans lequel il est monté. Le dispositif tel qu'il vient d'être décrit peut en outre être installé aisément dans l'émetteur et en être extrait tout aussi aisément en cas de besoin.

Il ressort néanmoins de ce qui précède que l'invention n'est pas limitée aux modes de mise en oeuvre qui ont été spécifiquement décrits et représentés sur les figures et qu'elle s'étend au contraire à toute variante passant par le biais de moyes équivalents.

## Revendications

1. Dispositif d'amortissement de vibrations à la résonance d'un émetteur de vibrations, sous la forme d'un ensemble unitaire indissociable comportant un matériau viscoélastique (3) entre d'une part un segment de couplage (1) sous forme d'un anneau ouvert élastiquement déformable constituant un moyen de couplage audit émetteur par encliquetage élastique sous contrainte radiale permanente dans une gorge annulaire de retenue correspondante, et d'autre part un segment de contrainte (2) également constitué d'un anneau ouvert élastiquement déformable, **caractérisé en ce que** les fentes d'ouverture (4, 5) respectives dudit segment de couplage (1) et dudit segment de contrainte (2) sont décalées l'une par rapport à l'autre, et **en ce qu'**il comporte des moyens de liaison l'une à l'autre de parties d'extrémité (7, 8) respectives dudit segment de couplage et dudit segment de contrainte se chevauchant entre lesdites fentes (4, 5).

2. Dispositif selon la revendication 1, **caractérisé en ce que** les parties d'extrémité respectives (7, 8) dudit segment de couplage (1) et dudit segment de contrainte (2) sont percées d'orifices traversants coïncidents respectifs (9, 10) pour l'insertion d'une butée interposée de l'une à l'autre.

3. Dispositif selon la revendication 2, **caractérisé en ce que** ladite butée et une vis, de préférence auto-indesserrable, venant en prise par une extrémité dans un filetage ménagé à cet effet dans l'orifice (10) dudit segment de contrainte (2), ladite butée se fixant ainsi de manière amovible.

4. Dispositif selon la revendication 2, **caractérisé en ce que** ladite: butée est une goupille: fendue, selon sa dire.ction longitudinale et enfoncée: en force dans l'orifice (10) ménagé dans ledit segment de contrainte (2), de manière à solidariser les deux segments en leurs parties d'extrémité se chevauchant.

5. Dispositif selon l'une quelconque des revendications 2 à 4, **caractérisé en ce que** l'orifice (9) dudit segment de couplage (1) présente la forme d'une lumière oblongue dans la direction longitudinale de l'anneau qui constitue ledit segment (1).

6. Dispositif selon l'une quelconque des revendications 2 à 5, **caractérisé en ce que** l'orifice (10) dudit segment de contrainte (2) présente, sur la face en vis-à-vis du segment de couplage (1), une couronne interne (20) de plus grand diamètre et de faible profondeur.

7. Dispositif selon l'une quelconque des revendications 1 à 6, **caractérisé en ce que** ledit segment de couplage (1) présente un perçage (12) dans sa partie d'extrémité (11) opposée à la partie d'extrémité (7) se solidarisant audit segment de contrainte (2), pour l'insertion de la branche d'une pince à l'intérieur de ce perçage (12).

8. Dispositif selon la revendication 7, **caractérisé en ce que** ledit segment de contrainte (2) présente un perçage (13) coïncidant avec le perçage (12) dudit segment de couplage (1), pour l'insertion de ladite branche de pince également à travers lui.

9. Dispositif selon l'une quelconque des revendications 2 à 8, **caractérisé en ce que** lesdits orifices (9, 10) sont disposés sensiblement le long de la ligne médiane (6) dudit segment de contrainte (2).

10. Dispositif selon l'une quelconque des revendications 1 à 9, **caractérisé en ce que** ledit segment de couplage (1) et ledit segment de contrainte (2.) sont réalisés à partir d'une feuille d'acier ressort.

## Claims

1. Device for damping vibrations at the resonance of a vibration transmitter, in the form of a non-removable integral assembly which comprises a viscoelastic material (3) between, on the one hand, a coupling segment (1) in the form of a resiliently deformable open ring which constitutes a means for coupling to the transmitter by means of resilient snap-fitting with permanent radial biasing in a corresponding annular retention groove and, on the other hand, a biasing segment (2) which is also constituted by a resiliently deformable open ring, **characterised in that** the respective opening apertures (4, 5) of the coupling segment (1) and the biasing segment (2) are offset relative to each other, and **in that** it comprises means for connecting to each other respective end portions (7, 8) of the coupling segment and the biasing segment which overlap each other between the apertures (4, 5).

2. Device according to claim 1, **characterised in that** the respective end portions (7, 8) of the coupling segment (1) and the biasing segment (2) are perforated by coincident respective through-holes (9, 10) for the insertion of an interposed stop extending from one to the other.

3. Device according to claim 2, **characterised in that** the stop is a screw, preferably a self-locking screw, which moves into engagement via one end with a thread which is provided for this purpose in the hole (10) of the biasing segment (2), the stop thus being fixed in a removable manner.

4. Device according to claim 2, **characterised in that** the stop is a pin which is split in the longitudinal direction thereof and which is force-fitted into the hole (10) which is provided in the biasing segment (2) in order to fix the two segments at the overlapping end portions thereof.

5. Device according to any one of claims 2 to 4, **characterised in that** the hole (9) of the coupling segment (1) is in the form of an oblong aperture in the longitudinal direction of the ring which constitutes the segment (1).

6. Device according to any one of claims 2 to 5, **characterised in that** the hole (10) of the biasing segment (2) has, at the face opposite the coupling segment (1), an internal collar (20) having a larger diameter and a small depth.

7. Device according to any one of claims 1 to 6, **characterised in that** the coupling segment (1) has a bore (12) in the end portion (11) thereof opposite the end portion (7) which is fixedly joined to the biasing segment (2) for the insertion of the branch of a pincer inside this bore (12).

8. Device according to claim 7, **characterised in that** the biasing segment (2) has a bore (13) which coincides with the bore (12) of the coupling segment (1), in order for the pincer branch also to be inserted through it.

9. Device according to any one of claims 2 to 8, **characterised in that** the holes (9, 10) are arranged substantially along the centre line (6) of the biasing segment (2).

10. Device according to any one of claims 1 to 9, **characterised in that** the coupling segment (1) and the biasing segment (2) are produced from a sheet of spring steel.

## Patentansprüche

1. Vorrichtung zur Dämpfung von Vibrationen aufgrund der Resonanz eines Emittenten von Vibrationen in Form einer untrennbaren einheitlichen Gesamtheit, umfassend ein viskoelastisches Material (3) zwischen einerseits einem Kopplungssegment (1) in Form eines elastisch verformbaren offenen Rings, der ein Mittel zum Koppeln mit dem Emittenten durch elastisches Einrasten unter dauerhafter radialer Belastung in einer entsprechenden Sicherungsringnut darstellt, und andererseits einem Spannsegment (2), das ebenfalls aus einem elastisch verformbaren offenen Ring besteht, **dadurch gekennzeichnet, dass** die jeweiligen Öffnungsschlitze (4, 5) des Kopplungssegments (1) und des Spannsegments (2) gegeneinander versetzt sind, und dass sie Verbindungsmittel an den beiden jeweiligen Endteilen (7, 8) des Kopplungssegments und des Spannsegments umfasst, die sich zwischen den Schlitzen (4, 5) überlappen.

2. Vorrichtung nach Anspruch 1, **dadurch gekennzeichnet, dass** die jeweiligen Endteile (7, 8) des Kopplungssegments (1) und des Spannsegments (2) durch jeweilige deckungsgleiche durchgehende Öffnungen (9, 10) für das Einführen eines dazwischenliegenden Anschlags von einem zum anderen durchbohrt sind.

3. Vorrichtung nach Anspruch 2, **dadurch gekennzeichnet, dass** der Anschlag eine vorzugsweise selbstsichernde Schraube ist, die an einem Ende in ein zu diesem Zweck in der Öffnung (10) des Spannsegments (2) angeordnetes Gewinde eingreift, wobei der Anschlag dadurch lösbar befestigt wird.

4. Vorrichtung nach Anspruch 2, **dadurch gekennzeichnet, dass** der Anschlag ein in Längsrichtung eingespannter Stift ist, der unter Krafteinwirkung in die im Spannsegment (2) angeordnete Öffnung (10) eingeführt wird, so dass die beiden Segmente an ihren sich überlappenden Endteilen verbunden werden.

5. Vorrichtung nach einem der Ansprüche 2 bis 4, **dadurch gekennzeichnet, dass** die Öffnung (9) des Kopplungssegments (1) die Form eines Längsschlitzes in Längsrichtung des Rings, der das Segment (1) darstellt, aufweist.

6. Vorrichtung nach einem der Ansprüche 2 bis 5, **dadurch gekennzeichnet, dass** die Öffnung (10) des Spannsegments (2) an der Seite gegenüber dem Kopplungssegment (1) einen Innenkranz (20) mit einem größeren Durchmesser und einer geringen Tiefe aufweist.

7. Vorrichtung nach einem der Ansprüche 1 bis 6, **dadurch gekennzeichnet, dass** das Kopplungssegment (1) eine Bohrung (12) im Endteil (11) gegenüber dem Endteil (7) aufweist, das mit dem Spannsegment (2) verbunden ist, um den Schenkel einer Zange in das Innere dieser Bohrung (12) einzuführen.

8. Vorrichtung nach Anspruch 7, **dadurch gekennzeichnet, dass** das Spannsegment (2) eine Bohrung (13) aufweist, die mit der Bohrung (12) des Kopplungssegments (1) übereinstimmt, um den Zangenschenkel ebenfalls durch diese einzuführen.

9. Vorrichtung nach einem der Ansprüche 2 bis 8, **dadurch gekennzeichnet, dass** die Öffnungen (9, 10) im Wesentlichen entlang der Mittellinie (6) des Spannsegments (2) angeordnet sind.

10. Vorrichtungen nach einem der Ansprüche 1 bis 9, **dadurch gekennzeichnet, dass** das Kopplungssegment (1) und das Spannsegment (2) aus einem Federstahlblatt gefertigt sind.
